# FASCICULE DE BREVET EUROPEEN

(11) **EP 3 922 591 B1**
(45) Date de publication et mention de la délivrance du brevet: **29.05.2024**
(21) Numéro de dépôt: 21178321.2
(22) Date de dépôt: 08.06.2021
(51) Int. Cl.: B66C 23/28, F16B 41/00, F16B 2/10, F16B 2/08, F16B 19/02

(54) **DISPOSITIF DE SÉCURITÉ ANTICHUTE POUR RETENIR ET ÉVITER LA CHUTE D'UN AXE DE LIAISON**
FALLSCHUTZVORRICHTUNG ZUM HALTEN UND VERHINDERN DES HERABFALLENS EINER VERBINDUNGSACHSE
FALL-PREVENTION SAFETY DEVICE FOR RETAINING AND PREVENTING THE FALL OF A LINKING PIN

(30) Priorité: 12.06.2020 FR 2006138
(43) Date de publication de la demande: 15.12.2021
(73) Titulaire: Manitowoc Crane Group France, 69570 Dardilly (FR)
(72) Inventeur: REYMOND, Guillaume, 03000 MONTILLY (FR)
(74) Mandataire: Germain Maureau

(56) Documents cités:
- EP-A1- 0 530 114
- EP-A1- 3 356 698
- CN-A- 105 423 024
- US-A1- 2001 048 860
- US-A1- 2017 144 865
- US-A1- 2018 134 524
- US-A1- 2019 127 184
- US-A1- 2019 137 008
- US-B2- 8 784 028

## Description

L'invention se rapporte à un dispositif de sécurité antichute, pour retenir et éviter la chute d'un axe de liaison employé pour un assemblage bout à bout de deux éléments de charpente d'une structure.

L'invention trouve une application favorite, et non limitative, pour la retenue d'un axe de liaison employé pour un assemblage bout à bout de deux éléments de charpente d'une structure de grue, et de préférence d'un mât de grue à tour ou d'une flèche de grue.

Classiquement, un mât de grue à tour est composé d'une pluralité d'éléments de charpente superposables verticalement, appelés à être assemblés entre eux, bout à bout, lors du montage de la grue sur son site d'exploitation, et à être séparés les uns des autres lors du démontage de la grue.

Les éléments de charpente, habituellement de section transversale carrée, sont constitués de quatre membrures d'angle (ou montants verticaux) qui sont réunies deux à deux par des structures en treillis ou en triangulation, appelées aussi contreventement, composées de diagonales et de traverses. Lors de l'assemblage vertical et bout à bout des éléments de charpente, les extrémités des membrures d'angle de deux éléments de charpente superposés sont rigidement reliés les unes aux autres par des axes de liaison, généralement associés à des éclisses, comme connu par exemple des documents FR3014509A1, FR2781535A1 et FR2680813A1.

Les axes de liaison présentent des têtes élargies prolongées par des tiges (souvent de forme cylindrique), et ils sont généralement rentrés dans les membrures d'angle de l'extérieur vers l'intérieur. Lors du démontage, les axes de liaison sont éjectés ou chassés à coup de masse, en frappant au niveau des extrémités des tiges. Cependant, lors de ces opérations d'éjection, il arrive parfois que l'axe de liaison soit catapulté et ainsi projeté à plusieurs mètres. Lors d'opérations en hauteur, l'axe de liaison peut donc chuter au sol, au risque de dégrader un appareil voire d'accidenter une personne.

Des dispositifs de serrage et de maintien sont disponibles dans la littérature, notamment dans le document US20190137008A1 qui propose un collier de verrouillage de conduits pour serrer et retenir entre un camion semi-remorque et une remorque des câbles électriques et pneumatiques, le document US8784028B2 qui propose un système de fixation pour attacher une attache pénétrante à une structure d'ancrage à destination de larges infrastructures (plateformes de forage par exemple) ou d'équipements (machines de dégagement de précision par exemple), et le document US20010048860A1 qui propose une attache pliable dont les extrémités sont respectivement fixées à un panneau et une vis pour retenir de manière flexible la vis sur le panneau à l'écart du trou de vis.

Cependant, aucun de ces dispositifs de serrage proposé n'est conformé pour retenir et éviter la chute d'un axe de liaison employé pour un assemblage bout à bout de deux éléments de charpente d'une structure comme une structure de grue.

L'invention propose de répondre à ce problème, en proposant une solution pour retenir et éviter la chute d'un axe de liaison, en particulier lors des opérations d'éjection, durant le désassemblage des deux éléments de charpente.

Ainsi, l'invention propose un dispositif de sécurité antichute, pour retenir et éviter la chute d'un axe de liaison employé pour un assemblage bout à bout de deux éléments de charpente d'une structure, comme par exemple une structure de grue, ce dispositif de sécurité antichute comprenant :
- un collier de serrage présentant au moins une rainure interne, ce collier de serrage étant configurable entre une position ouverte apte à autoriser l'insertion d'une tête élargie de l'axe de liaison à l'intérieur du collier de serrage, et au moins une position fermée apte à bloquer la tête élargie de l'axe de liaison à l'intérieur de la rainure interne du collier de serrage ;
- un verrou coopérant avec le collier de serrage pour le verrouiller dans la position fermée ;
- un lien d'amarrage ancré sur le collier de serrage afin d'amarrer le dispositif de sécurité antichute sur un élément fixe, comme par exemple l'un des deux éléments de charpente.

De cette manière, durant le désassemblage des deux éléments de charpente, il suffit d'ouvrir le collier de serrage pour ensuite le resserrer et le verrouiller autour de la tête élargie de l'axe de liaison, de manière à solidariser temporairement le collier de serrage à l'axe de liaison. Il suffit par ailleurs d'amarrer ce collier de serrage au moyen du lien d'amarrage, de sorte que lorsque l'axe de liaison est éjecté (par exemple au moyen d'une masse), ce dernier est retenu par le dispositif de sécurité antichute, et se retrouve à pendre au bout du lien d'amarrage. Une fois l'axe de liaison éjecté, il suffit alors de tirer sur le lien d'amarrage, puis de déverrouiller et ouvrir le collier de serrage pour récupérer l'axe de liaison.

Il est bien entendu au sens de l'invention qu'un « axe » désigne un axe physique formant une pièce allongée (par exemple cylindrique) accouplant des éléments de charpente entre eux.

Par ailleurs, le lien d'amarrage peut être formé d'un lien souple, comme par exemple une sangle, un câble, une corde, une chaine ou tout autre lien équivalent. Ainsi, ce lien d'amarrage peut être amarré sur l'élément fixe par exemple par ceinturage ou par accrochage.

Selon une caractéristique, le collier de serrage est ajustable sélectivement dans plusieurs positions fermées dans lesquelles le collier de serrage est plus ou moins fermée de manière à s'adapter à plusieurs tailles de la tête élargie de l'axe de liaison, le verrou amovible étant conformé pour verrouiller sélectivement chacune des différentes positions fermées.

Ainsi, avec un même collier de serrage, plusieurs tailles d'axe de liaison, et plus spécifiquement plusieurs tailles de tête élargie, peuvent être accouplées au collier de serrage, ce qui est particulièrement avantageux quand par exemple, sur une même structure, différentes tailles d'axe de liaison sont employées pour raccorder les éléments de charpente.

Selon une possibilité, le collier de serrage comprend deux mâchoires reliées par un axe de pivotement, de sorte que les deux mâchoires sont couplées en rotation, où les deux mâchoires présentent chacune une rainure interne en vis-à-vis afin que la tête élargie de l'axe de liaison puisse être bloquée à l'intérieur de leurs rainures internes respectives en position fermée.

Cette conception avec deux mâchoires pivotantes est avantageuse pour pouvoir facilement ouvrir et fermer le collier de serrage autour de la tête élargie de l'axe de liaison.

Selon une autre possibilité, le verrou amovible coopère avec les deux mâchoires pour un verrouillage dans la position fermée.

Selon une autre possibilité, le verrou se présente sous la forme d'un axe de verrouillage qui est engagé dans la position fermée à travers des trous de verrouillage prévus respectivement dans les deux mâchoires.

Ainsi, il suffit d'aligner les trous de verrouillage des deux mâchoires respectives puis d'engager l'axe de verrouillage à travers ceux-ci.

Avantageusement, le dispositif de sécurité antichute comprend un fermoir, comme par exemple une goupille, une épingle ou un clip, apte à coopérer avec l'axe de verrouillage pour le verrouiller en position une fois traversé les trous de verrouillage.

Dans une réalisation particulière, l'une au moins des deux mâchoires présente plusieurs trous de verrouillage, afin de rapprocher plus ou moins les deux mâchoires l'une de l'autre et ainsi définir plusieurs positions fermées selon que l'axe de verrouillage est engagé à travers tel ou tel trou de verrouillage.

Ainsi, avec plusieurs trous de verrouillage sur l'une au moins des deux mâchoires, il est possible de définir plusieurs positions fermées, plus ou moins fermée, pour le collier de serrage, et donc de pouvoir s'adapter à plusieurs tailles de la tête élargie de l'axe de liaison.

Dans un mode de réalisation particulier, le collier de serrage présente un arceau sur lequel le lien d'amarrage est ancré.

L'invention se rapporte également à un procédé de sécurisation antichute d'un axe de liaison, pour retenir et éviter la chute de l'axe de liaison employé pour un assemblage bout à bout de deux éléments de charpente d'une structure, ce procédé de sécurisation antichute mettant en oeuvre un dispositif de sécurité antichute conforme à l'invention, en :
- amarrant le lien d'amarrage à un élément fixe ;
- ouvrant le collier de serrage de manière à l'amener en position ouverte ;
- insérant une tête élargie de l'axe de liaison à l'intérieur du collier de serrage ;
- fermant le collier de serrage de manière à l'amener en position fermée, de sorte que la tête élargie de l'axe de liaison est bloquée à l'intérieur de la rainure interne du collier de serrage ;
- verrouillant le collier de serrage dans la position fermée au moyen du verrou.

Selon une possibilité, l'élément fixe sur lequel le lien d'amarrage est amarré correspond à l'un des deux éléments de charpente, avec de préférence un amarrage en hauteur, au-dessus de l'axe de liaison.

Selon une autre possibilité, en préalable, l'axe de liaison est poussé dans le sens d'un décollement de sa tête élargie vis-à-vis de l'un des deux éléments de charpente, afin de rendre accessible la tête élargie pour l'insérer à l'intérieur du collier de serrage.

En effet, si l'axe de liaison a été mis en place au moyen d'une masse, en frappant sur sa tête élargie, il est classique que la tête élargie soit plaquée contre l'un des deux éléments de charpente. Il est donc avantageux de pousser l'axe de liaison dans le sens inverse, par exemple en frappant sur son extrémité libre opposée à la tête élargie, de manière à décoller la tête élargie de l'élément de charpente, afin de pouvoir insérer cette tête élargie à l'intérieur du collier de serrage.

Dans une réalisation avantageuse, le procédé de sécurisation antichute est mis en oeuvre pour une structure de grue, comme par exemple un mât ou une flèche.

D'autres caractéristiques et avantages de la présente invention apparaîtront à la lecture de la description détaillée ci-après, d'un exemple de mise en oeuvre non limitatif, faite en référence aux figures annexées dans lesquelles :
[Fig 1] est une vue schématique en perspective d'un dispositif de sécurité antichute selon l'invention, avec son collier de serrage en position fermée et verrouillé au moyen du verrou, et sans le lien d'amarrage ;
[Fig 2] est une vue schématique en perspective du collier de serrage du dispositif de sécurité antichute de la Figure 1 en position ouverte ;
[Fig 3] est une vue schématique de face (à gauche) et de côté (à droite) du dispositif de sécurité antichute de la Figure 1, avec son collier de serrage verrouillé en position fermée sur une tête élargie d'un axe de liaison de grande taille ;
[Fig 4] est une vue schématique de face (à gauche) et de côté (à droite) du dispositif de sécurité antichute de la Figure 1, avec son collier de serrage verrouillé en position fermée sur une tête élargie d'un axe de liaison de moyenne taille, comparativement à la Figure 3 ;
[Fig 5] est une vue schématique de face (à gauche) et de côté (à droite) du dispositif de sécurité antichute de la Figure 1, avec son collier de serrage verrouillé en position fermée sur une tête élargie d'un axe de liaison de petite taille, comparativement aux Figures 3 et 4 ;
[Fig 6] est une vue schématique en perspective de deux éléments de charpente d'une structure assemblés bout à bout au moyen d'un axe de liaison, dans une première situation (Figure 6(a) à gauche) où l'axe de liaison est dans une position d'assemblage avec sa tête élargie qui est plaquée sur l'un des deux éléments de charpente, et dans une deuxième situation (Figure 6(b) à droite) où l'axe de liaison a été poussé de sorte que sa tête élargie est décollée de l'élément de charpente ;
[Fig 7] est une vue schématique en perspective des deux éléments de charpente de la Figure 6, dans une troisième situation (Figure 7(a) à gauche) où le collier de serrage du dispositif de sécurité antichute de la Figure 1 est placé en position ouverte autour de la tête élargie de l'axe de liaison, et dans une quatrième situation (Figure 7(b) à droite) où le collier de serrage est fermé et verrouillé autour de la tête élargie de l'axe de liaison, le lien d'amarrage étant amarré en hauteur sur un élément de charpente ;
[Fig 8] est une vue schématique en perspective des deux éléments de charpente des Figures 6 et 7, dans une cinquième situation où l'axe de liaison est poussé hors des éléments de charpente, avec le collier de serrage du dispositif de sécurité antichute de la Figure 1 fermé et verrouillé autour de sa tête élargie ; et
[Fig 9] est une vue schématique en perspective des deux éléments de charpente des Figures 6 à 8, dans une sixième situation où l'axe de liaison est complètement poussé hors des éléments de charpente, avec le collier de serrage du dispositif de sécurité antichute de la Figure 1 fermé et verrouillé autour de sa tête élargie.

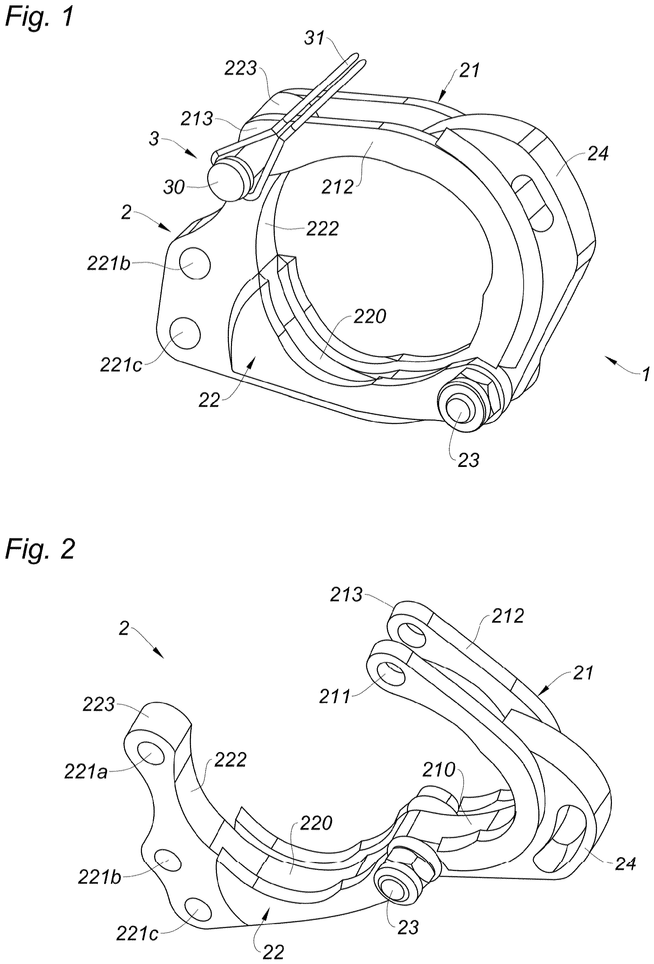

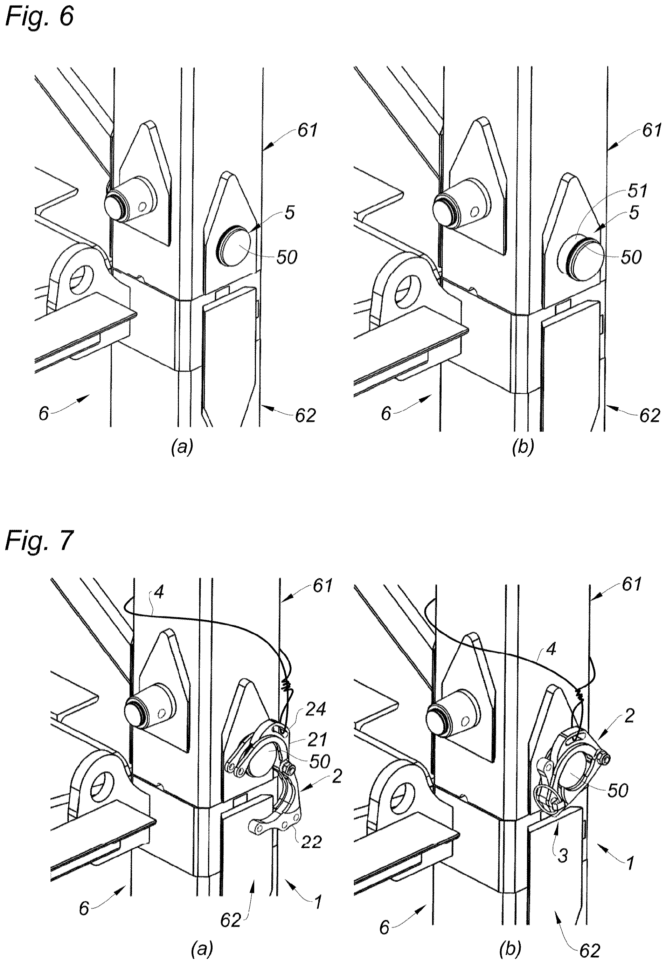

En référence aux Figures 1 et 2, un dispositif de sécurité antichute 1 comprend un collier de serrage 2 qui comprend deux mâchoires 21, 22 (respectivement une première mâchoire 21 et une seconde mâchoire 22) reliées par un axe de pivotement 23, de sorte que les deux mâchoires 21, 22 sont couplées en rotation, où les deux mâchoires 21, 22 présentent chacune une rainure interne 210, 220 en vis-à-vis. En référence aux Figures 6 à 9, ce dispositif de sécurité antichute 1 est conformé pour retenir et éviter la chute d'un axe de liaison 5 employé pour un assemblage bout à bout de deux éléments de charpente 61, 62 d'une structure 6, comme par exemple une structure de grue.

Le collier de serrage 2 est configurable entre :
- une position ouverte (visible en Figure 2) dans laquelle les mâchoires 21, 22 sont écartées l'une de l'autre pour autoriser l'insertion d'une tête élargie 50 de l'axe de liaison 5 à l'intérieur du collier de serrage 2, et
- au moins une position fermée (visible en Figure 1) apte à bloquer la tête élargie 50 de l'axe de liaison 5 à l'intérieur des rainures internes 210, 220 des mâchoires 21, 22.

Les deux mâchoires 21, 22 sont de forme arquée ou incurvée pour épouser la tête élargie 50 de forme cylindrique qui se retrouvera coincée dans les rainures internes 210, 220 des mâchoires 21, 22.

Le dispositif de sécurité antichute 1 comprend un verrou 3 coopérant avec le collier de serrage 2 pour le verrouiller dans la position fermée. Ce verrou 3 forme un verrou amovible qui coopère avec les deux mâchoires 21, 22 pour un verrouillage dans la position fermée. Ce verrou 3 se présente sous la forme d'un axe de verrouillage 30 qui est engagé dans la position fermée à travers des trous de verrouillage 211, 221a, 221b, 221c prévus respectivement dans les deux mâchoires 21, 22.

La première mâchoire 21 présente une terminaison 212 munie de deux flasques parallèles, espacées l'une de l'autre, et un trou de verrouillage 211 traverse ces deux flasques de la terminaison 212, au niveau de son extrémité libre 213. La seconde mâchoire 22 présente une terminaison 222 qui se glisse entre les deux flasques de la terminaison 212 de la première mâchoire 21 en position fermée, et plusieurs trous de verrouillage 221a, 221b, 221c traversent cette terminaison 222. Les trous de verrouillage 211, 221a, 221b, 221c sont tous à équidistance de l'axe de pivotement 23, de sorte que les trous de verrouillage 221a, 221b, 221c de la seconde mâchoire 22 peuvent tous être alignés avec le trou de verrouillage 211 de la première mâchoire 21, selon le pivotement relatif entre les deux mâchoires 21, 22.

Ainsi, il est possible de rapprocher plus ou moins les deux mâchoires 21, 22 l'une de l'autre et ainsi définir plusieurs positions fermées selon que l'axe de verrouillage 30 est engagé à travers tel ou tel trou de verrouillage 221a, 221b, 221c de la seconde mâchoire 22. Le collier de serrage 2 est donc ajustable sélectivement dans plusieurs positions fermées dans lesquelles le collier de serrage 2 est plus ou moins fermée de manière à s'adapter à plusieurs tailles de la tête élargie 50 de l'axe de liaison 5, le verrou 3 amovible étant conformé pour verrouiller sélectivement chacune des différentes positions fermées.

Dans l'exemple illustré, trois différents trous de verrouillage 221a, 221b, 221c sont prévus sur la seconde mâchoire 22, correspondant ainsi à trois positions fermées distinctes associées à trois tailles de la tête élargie 50 de l'axe de liaison 5, qui peuvent être nommées une grande taille (ou grand diamètre), une moyenne taille (ou moyen diamètre) et une petite taille (ou petit diamètre).

Les trous de verrouillage 221 comprennent ainsi :
- un trou de verrouillage grande taille 221a, qui est le plus proche de l'extrémité libre 223 de la terminaison 222 de la seconde mâchoire 22 ;
- un trou de verrouillage petite taille 221c, qui est le plus éloigné de l'extrémité libre 223 de la terminaison 222 de la seconde mâchoire 22 ; et
- un trou de verrouillage moyenne taille 221b, qui est entre le trou de verrouillage grande taille 221a et le trou de verrouillage petite taille 221c.

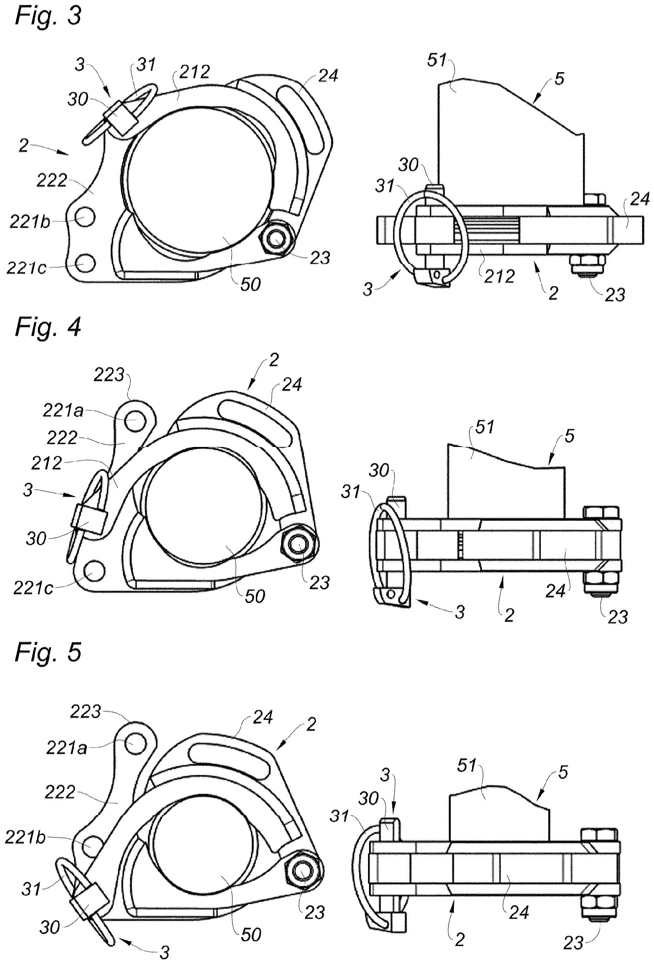

La Figure 3 illustre une situation où le collier de serrage 2 est verrouillé dans une position fermée sur une tête élargie 50 de grande taille, l'axe de verrouillage 30 traversant ainsi le trou de verrouillage grande taille 221a et le trou de verrouillage 211 qui sont en alignement. La Figure 4 illustre une situation où le collier de serrage 2 est verrouillé dans une position fermée sur une tête élargie 50 de moyenne taille, l'axe de verrouillage 30 traversant ainsi le trou de verrouillage moyenne taille 221b et le trou de verrouillage 211 qui sont en alignement. La Figure 5 illustre une situation où le collier de serrage 2 est verrouillé dans une position fermée sur une tête élargie 50 de petite taille, l'axe de verrouillage 30 traversant ainsi le trou de verrouillage petite taille 221c et le trou de verrouillage 211 qui sont en alignement.

Comme visible sur les Figures 1 et 3 à 5, il est prévu un fermoir 31 de type goupille pour coopérer avec l'axe de verrouillage 30 afin de le verrouiller en position une fois traversé les trous de verrouillage 211, 221a, 221b, 221c concernés.

Le dispositif de sécurité antichute 1 comprend un lien d'amarrage 4 ancré sur le collier de serrage 2, et plus précisément sur l'une des deux mâchoires 21, 22, et donc la fonction est d'amarrer le collier de serrage 2 et donc le dispositif de sécurité antichute 1 sur un élément fixe, comme par exemple l'un des deux éléments de charpente 61, 62 ou bien un opérateur.

Ce lien d'amarrage 4 (visible sur les Figures 7 à 9) peut être formé d'un lien souple, comme par exemple une sangle, un câble, une corde, une chaine ou tout autre lien équivalent. Ainsi, ce lien d'amarrage 4 peut être amarré sur l'un des deux éléments de charpente 61, 62 par exemple par ceinturage (comme c'est le cas sur les Figures 7 à 9) ou par accrochage, et par exemple sur l'élément de charpente supérieur 61, c'est-à-dire celui situé au-dessus lorsque les deux éléments de charpente 61, 62 sont montés bout à bout verticalement.

Le collier de serrage 2 présente un arceau 24 sur lequel le lien d'amarrage 4 est ancré, par exemple par bouclage. Dans l'exemple illustré, cet arceau 24 est prévu sur la première mâchoire 21, entre la terminaison 212 et l'axe de pivotement 23.

La suite de la description concerne un procédé de sécurisation antichute de l'axe de liaison 5, pour retenir et éviter la chute de l'axe de liaison 5 employé pour un assemblage bout à bout de deux éléments de charpente 61, 62 d'une structure 6, ce procédé de sécurisation antichute mettant en oeuvre le dispositif de sécurité antichute 1 précédemment décrit pendant le désassemblage de ces deux éléments de charpente 61, 62. Cette description sera faite en référence aux Figures 6 à 9 qui illustrent les différentes situations consécutives lors d'un tel procédé de sécurisation antichute.

Dans une première situation illustrée en Figure 6(a), l'axe de liaison 5 est dans une position d'assemblage avec sa tête élargie 50 qui est plaquée sur l'un des deux éléments de charpente 61, 62, comme par exemple l'élément de charpente supérieur 61. L'axe de liaison 5 présente un arbre de liaison 51, qui prolonge la tête élargie 50, et qui traverse les deux éléments de charpente 61, 62.

Dans une deuxième situation illustrée en Figure 6(b), l'axe de liaison 5 a été poussé, par exemple au moyen d'une broche frappée contre l'extrémité libre de l'arbre de liaison 51, de sorte que sa tête élargie 50 est décollée de l'élément de charpente supérieur 61, rendant ainsi accessible la tête élargie 50 pour l'insérer à l'intérieur du collier de serrage 2.

Dans une troisième situation illustrée en Figure 7(a), le lien d'amarrage 4 est amarré sur l'élément de charpente supérieur 61, par exemple par ceinturage, et le collier de serrage 2 est en position ouverte et ce collier de serrage 2 est placé autour de la tête élargie 50.

Dans une quatrième situation illustrée en Figure 7(b), la tête élargie 50 de l'axe de liaison 5 étant à l'intérieur du collier de serrage 2, ce collier de serrage 2 est fermé, de manière à l'amener en position fermée afin que la tête élargie 50 soit bloquée à l'intérieur du collier de serrage 2, et l'axe de verrouillage 30 du verrou 3 est positionné pour verrouiller le collier de serrage dans la position fermée, et le fermoir 31 est mis en place pour bloquer l'axe de verrouillage 30.

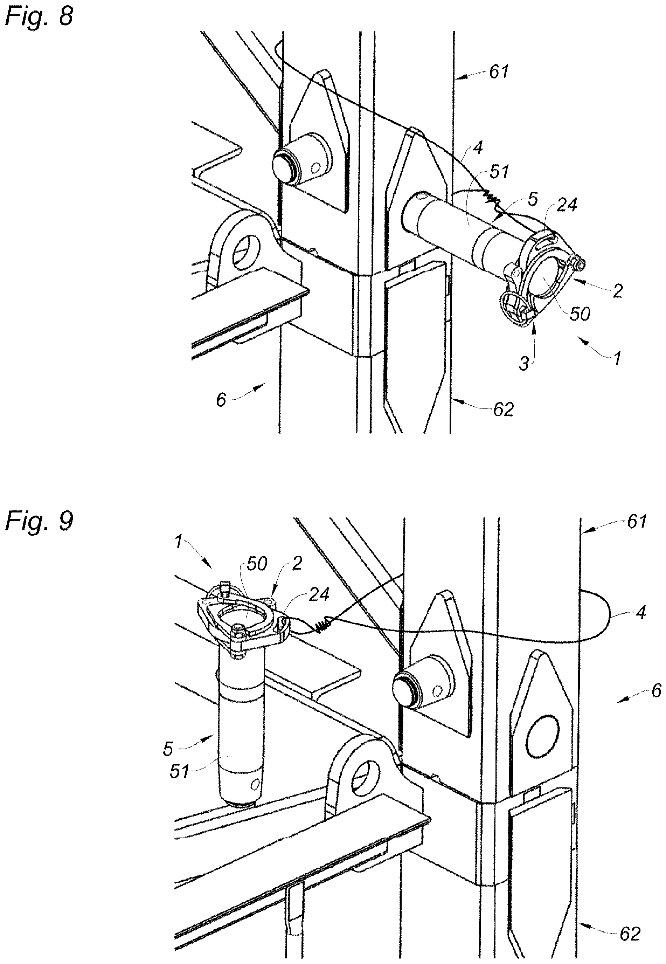

Dans une cinquième situation illustrée en Figure 8, l'axe de liaison 5 est poussé hors des éléments de charpente 61, 62, par exemple au moyen d'une broche frappée contre l'extrémité libre de l'arbre de liaison 51, avec le collier de serrage 2 fermé et verrouillé autour de sa tête élargie. Ainsi, lorsque l'arbre de liaison 51 sort complètement des éléments de charpente 61, 62, il tombe mais il est retenu par le collier de serrage 2 qui est lui-même retenu par le lien d'amarrage 4.

Dans une sixième situation illustrée en Figure 9, l'axe de liaison 5 est complètement poussé hors des éléments de charpente 61, 62, sans avoir chuté grâce au dispositif de sécurité antichute 1, et l'opérateur peut désormais se saisir de l'axe de liaison 5 et ensuite déverrouiller et ouvrir le collier de serrage 2.

Il est à noter que ce dispositif de sécurité antichute 1 est particulièrement adapté pour des opérations en hauteur, et en particulier sur une structure 6 de grue, comme par exemple un mât ou une flèche.

## Revendications

1. Dispositif de sécurité antichute (1), pour retenir et éviter la chute d'un axe de liaison (5) employé pour un assemblage bout à bout de deux éléments de charpente (61, 62) d'une structure (6), comme par exemple une structure (6) de grue, ledit dispositif de sécurité antichute (1) comprenant :
- un collier de serrage (2) présentant au moins une rainure interne (210; 220), ledit collier de serrage (2) étant configurable entre une position ouverte apte à autoriser l'insertion d'une tête élargie (50) de l'axe de liaison (5) à l'intérieur du collier de serrage (2), et au moins une position fermée apte à bloquer la tête élargie (50) de l'axe de liaison (5) à l'intérieur de la rainure interne (210; 220) du collier de serrage (2) ;
- un verrou (3) coopérant avec le collier de serrage (2) pour le verrouiller dans la position fermée ;
- un lien d'amarrage (4) ancré sur le collier de serrage (2) afin d'amarrer le dispositif de sécurité antichute (1) sur un élément fixe, comme par exemple l'un des deux éléments de charpente (61, 62).

2. Dispositif de sécurité antichute (1) selon la revendication 1, dans lequel le collier de serrage (2) est ajustable sélectivement dans plusieurs positions fermées dans lesquelles le collier de serrage (2) est plus ou moins fermée de manière à s'adapter à plusieurs tailles de la tête élargie (50) de l'axe de liaison (5), le verrou (3) amovible étant conformé pour verrouiller sélectivement chacune des différentes positions fermées.

3. Dispositif de sécurité antichute (1) selon l'une quelconque des revendications 1 et 2, dans lequel le collier de serrage (2) comprend deux mâchoires (21, 22) reliées par un axe de pivotement (23), de sorte que les deux mâchoires (21, 22) sont couplées en rotation, où les deux mâchoires (21, 22) présentent chacune une rainure interne (210; 220) en vis-à-vis afin que la tête élargie (50) de l'axe de liaison (5) puisse être bloquée à l'intérieur de leurs rainures internes (210, 220) respectives en position fermée.

4. Dispositif de sécurité antichute (1) selon la revendication 3, dans lequel le verrou (3) amovible coopère avec les deux mâchoires (21, 22) pour un verrouillage dans la position fermée.

5. Dispositif de sécurité antichute (1) selon la revendication 4, dans lequel le verrou (3) se présente sous la forme d'un axe de verrouillage (30) qui est engagé dans la position fermée à travers des trous de verrouillage (211 ; 221a, 221b, 221c) prévus respectivement dans les deux mâchoires (21, 22).

6. Dispositif de sécurité antichute (1) selon les revendications 2 et 5, dans lequel l'une au moins des deux mâchoires (21, 22) présente plusieurs trous de verrouillage (221a, 221b, 221c), afin de rapprocher plus ou moins les deux mâchoires (21, 22) l'une de l'autre et ainsi définir plusieurs positions fermées selon que l'axe de verrouillage (30) est engagé à travers tel ou tel trou de verrouillage (221a ; 221b ; 221c).

7. Dispositif de sécurité antichute (1) selon l'une quelconque des revendications 5 et 6, comprenant un fermoir (31), comme par exemple une goupille, une épingle ou un clip, apte à coopérer avec l'axe de verrouillage (30) pour le verrouiller en position une fois traversé les trous de verrouillage (211 ; 221a, 221b, 221c).

8. Dispositif de sécurité antichute (1) selon l'une quelconque des revendications précédentes, dans lequel le collier de serrage (2) présente un arceau (24) sur lequel le lien d'amarrage (4) est ancré.

9. Procédé de sécurisation antichute d'un axe de liaison (5), pour retenir et éviter la chute de l'axe de liaison (5) employé pour un assemblage bout à bout de deux éléments de charpente (61, 62) d'une structure (6), ledit procédé de sécurisation antichute mettant en oeuvre un dispositif de sécurité antichute (1) conforme à l'une quelconque des revendications précédentes, en :
- amarrant le lien d'amarrage (4) sur un élément fixe ;
- ouvrant le collier de serrage (2) de manière à l'amener en position ouverte ;
- insérant une tête élargie (50) de l'axe de liaison (5) à l'intérieur du collier de serrage (2) ;
- fermant le collier de serrage (2) de manière à l'amener en position fermée, de sorte que la tête élargie (50) de l'axe de liaison (5) est bloquée à l'intérieur de la rainure interne (210; 220) du collier de serrage (2) ;
- verrouillant le collier de serrage (2) dans la position fermée au moyen du verrou.

10. Procédé de sécurisation antichute selon la revendication 9, dans lequel l'élément fixe sur lequel le lien d'amarrage (4) est amarré correspond à l'un des deux éléments de charpente (61, 62).

11. Procédé de sécurisation antichute selon l'une quelconque des revendications 9 et 10, dans lequel, en préalable, l'axe de liaison (5) est poussé dans le sens d'un décollement de sa tête élargie (50) vis-à-vis de l'un des deux éléments de charpente (61, 62), afin de rendre accessible la tête élargie (50) pour l'insérer à l'intérieur du collier de serrage (2).

12. Procédé de sécurisation antichute selon l'une quelconque des revendications 9 à 11, mis en oeuvre pour une structure (6) de grue, comme par exemple un mât ou une flèche.

## Patentansprüche

1. Absturzsicherungsvorrichtung (1) zum Auffangen und Verhindern des Absturzes eines Verbindungsbolzens (5), der für eine End-zu-End-Montage von zwei Rahmenelementen (61, 62) einer Struktur (6), wie zum Beispiel einer Kranstruktur (6), verwendet wird, wobei die Absturzsicherungsvorrichtung (1) Folgendes umfasst:
- eine Klemmschelle (2), die mindestens eine Innennut (210; 220) aufweist, wobei die Klemmschelle (2) zwischen einer offenen Position, die ausgelegt ist, um das Einführen eines vergrößerten Kopfes (50) des Verbindungsbolzens (5) in die Klemmschelle (2) zu ermöglichen, und mindestens einer geschlossenen Position, die ausgelegt ist, um den vergrößerten Kopf (50) des Verbindungsbolzens (5) in der Innennut (210; 220) der Klemmschelle (2) zu arretieren, konfigurierbar ist;
- eine Verriegelung (3), die mit der Klemmschelle (2) zusammenwirkt, um diese in der geschlossenen Position zu verriegeln; und
- ein Festmacherbindeglied (4), das an der Klemmschelle (2) verankert ist, um die Absturzsicherungsvorrichtung (1) an einem festen Element, wie zum Beispiel einem der beiden Rahmenelemente (61, 62), festzumachen.

2. Absturzsicherungsvorrichtung (1) nach Anspruch 1, wobei die Klemmschelle (2) selektiv in mehrere geschlossene Positionen einstellbar ist, in denen die Klemmschelle (2) mehr oder weniger geschlossen ist, derart, dass sie sich an verschiedene Größen des vergrößerten Kopfes (50) des Verbindungsbolzens (5) anpasst, wobei die abnehmbare Verriegelung (3) dazu ausgebildet ist, jede der verschiedenen geschlossenen Positionen zu verriegeln.

3. Absturzsicherungsvorrichtung (1) nach einem der Ansprüche 1 und 2, wobei die Klemmschelle (2) zwei Backen (21, 22) umfasst, die durch einen Schwenkbolzen (23) verbunden sind, so dass die beiden Backen (21, 22) drehbar gekoppelt sind, wobei die beiden Backen (21, 22) jeweils eine Innennut (210; 220) aufweisen, die einander zugewandt ist, so dass der vergrößerte Kopf (50) des Verbindungsbolzens (5) in der geschlossenen Position in ihren jeweiligen Innennuten (210, 220) arretiert werden kann.

4. Absturzsicherungsvorrichtung (1) nach Anspruch 3, wobei die abnehmbare Verriegelung (3) mit den beiden Backen (21, 22) zur Verriegelung in der geschlossenen Position zusammenwirkt.

5. Absturzsicherungsvorrichtung (1) nach Anspruch 4, wobei die Verriegelung (3) in Form eines Verriegelungsbolzens (30) vorliegt, der in der geschlossenen Position durch Verriegelungslöcher (211; 221a, 221b, 221c) eingreift, die jeweils in den beiden Backen (21, 22) vorgesehen sind.

6. Absturzsicherungsvorrichtung (1) nach einem der Ansprüche 2 und 5, wobei mindestens eine der beiden Backen (21, 22) mehrere Verriegelungslöcher (221a, 221b, 221c) aufweist, um die beiden Backen (21, 22) mehr oder weniger nahe aneinander zu bringen und somit mehrere geschlossene Positionen abhängig davon zu definieren, ob der Verriegelungsbolzen (30) durch ein bestimmtes Verriegelungsloch (221a; 221b; 221c) eingreift.

7. Absturzsicherungsvorrichtung (1) nach einem der Ansprüche 5 und 6, umfassend einen Verschluss (31), wie zum Beispiel einen Positionsstift, eine Sperrnadel oder eine Klammer, der ausgelegt ist, um mit dem Verriegelungsbolzen (30) zusammenzuwirken, um diesen in seiner Position zu verriegeln, nachdem er durch die Verriegelungslöcher (211; 221a, 221b, 221c) hindurchgegangen ist.

8. Absturzsicherungsvorrichtung (1) nach einem der vorhergehenden Ansprüche, wobei die Klemmschelle (2) einen Bügel (24) aufweist, an dem das Festmacherbindeglied (4) verankert ist.

9. Absturzsicherungsverfahren für einen Verbindungsbolzen (5) zum Auffangen und Verhindern des Absturzes des Verbindungsbolzens (5), der für eine End-zu-End-Montage von zwei Rahmenelementen (61, 62) einer Struktur (6) verwendet wird, wobei das Absturzsicherungsverfahren durch eine Absturzsicherungsvorrichtung (1) umgesetzt wird, die nach einem der vorhergehenden Ansprüche ausgebildet ist, umfassend:
- Festmachen des Festmacherbindeglieds (4) am festen Element;
- Öffnen der Klemmschelle (2), um sie in die offene Position zu bringen;
- Einführen eines vergrößerten Kopfes (50) des Verbindungsbolzens (5) in die Klemmschelle (2);
- Schließen der Klemmschelle (2), um diese in die geschlossene Position zu bringen, so dass der vergrößerte Kopf (50) des Verbindungsbolzens (5) in der Innennut (210; 220) der Klemmschelle (2) arretiert wird;
- Verriegeln der Klemmschelle (2) in der geschlossenen Position mit der Verriegelung.

10. Absturzsicherungsverfahren nach Anspruch 9, wobei das feste Element, an dem das Festmacherbindeglied (4) festgemacht ist, einem der beiden Rahmenelemente (61, 62) entspricht.

11. Absturzsicherungsverfahren nach einem der Ansprüche 9 und 10, wobei zunächst der Verbindungsbolzen (5) in Richtung einer Ablösung seines erweiterten Kopfes (50) relativ zu einem der beiden Rahmenelemente (61, 62) geschoben wird, um den erweiterten Kopf (50) zum Einsetzen in die Klemmschelle (2) zugänglich zu machen.

12. Absturzsicherungsverfahren nach einem der Ansprüche 9 bis 11, das für eine Kranstruktur (6), wie zum Beispiel einen Mast oder einen Ausleger, umgesetzt wird.

## Claims

1. A fall protection safety device (1), to retain and prevent the fall of a connecting pin (5) used for an end-to-end assembly of two frame elements (61, 62) of a structure (6), such as for example a crane structure (6), said fall protection safety device (1) comprising:
- a clamping collar (2) having at least one internal groove (210; 220), said clamping collar (2) being configurable between an open position able to authorize the insertion of an enlarged head (50) of the connecting pin (5) inside the clamping collar (2), and at least one closed position able to block the enlarged head (50) of the connecting pin (5) inside the internal groove (210; 220) of the clamping collar (2);
- a lock (3) cooperating with the clamping collar (2) to lock it in the closed position;
- a mooring link (4) anchored to the clamping collar (2) in order to moor the fall protection safety device (1) on a fixed element, such as for example one of the two frame elements (61, 62).

2. The fall protection safety device (1) according to claim 1, wherein the clamping collar (2) is selectively adjustable in several closed positions in which the clamping collar (2) is more or less closed so as to be adapted to several sizes of the enlarged head (50) of the connecting pin (5), the removable lock (3) being shaped to selectively lock each of the different closed positions.

3. The fall protection safety device (1) according to any one of claims 1 and 2, wherein the clamping collar (2) comprises two jaws (21, 22) connected by a pivot pin (23), so that the two jaws (21, 22) are coupled in rotation, wherein the two jaws (21, 22) each have an internal groove (210; 220) facing each other so that the enlarged head (50) of the connecting pin (5) can be locked inside their respective internal grooves (210, 220) in the closed position.

4. The fall protection safety device (1) according to claim 3, wherein the removable lock (3) cooperates with the two jaws (21, 22) for a locking in the closed position.

5. The fall protection safety device (1) according to claim 4, wherein the lock (3) is in the form of a locking pin (30) which is engaged in the closed position through locking holes (211. ; 221a, 221b, 221c) provided respectively in the two jaws (21, 22).

6. The fall protection safety device (1) according to claims 2 and 5, wherein at least one of the two jaws (21, 22) has several locking holes (221a, 221b, 221c), in order to bring closer more or less the two jaws (21, 22) from one another and thus define several closed positions depending on whether the locking pin (30) is engaged through a particular locking hole (221a; 221b; 221c).

7. The fall protection safety device (1) according to any one of claims 5 and 6, comprising a clasp (31), such as for example a cotter, a pin or a clip, adapted to cooperate with the locking pin (30) to lock it in position after passing through the locking holes (211; 221a, 221b, 221c).

8. The fall protection safety device (1) according to any one of the preceding claims, wherein the clamping collar (2) has a hoop (24) on which the mooring link (4) is anchored.

9. A fall protection securing method of a connecting pin (5), to retain and prevent the fall of the connecting pin (5) used for an end-to-end assembly of two frame elements (61, 62) of a structure (6), said fall protection securing method implementing a fall protection safety device (1) according to any one of the preceding claims, by:
- mooring the mooring link (4) on a fixed element;
- opening the clamping collar (2) so as to bring it into the open position;
- inserting an enlarged head (50) of the connecting pin (5) inside the clamping collar (2);
- closing the clamping collar (2) so as to bring it into the closed position, so that the enlarged head (50) of the connecting pin (5) is blocked inside the internal groove (210; 220) of the clamping collar (2);
- locking the clamping collar (2) in the closed position by means of the lock.

10. The fall protection securing method according to claim 9, wherein the fixed element on which the mooring link (4) is moored corresponds to one of the two frame elements (61, 62).

11. The fall protection securing method according to any one of claims 9 and 10, wherein, first, the connecting pin (5) is pushed in the direction of a detachment of its enlarged head (50) relatively to one of the two frame elements (61, 62), in order to make the enlarged head (50) accessible to insert it inside the clamping collar (2).

12. The fall protection securing method according to any one of claims 9 to 11, implemented for a crane structure (6), such as for example a mast or a boom.
